# EUROPEAN PATENT SPECIFICATION

(11) **EP 2 711 261 B1**
(45) Date of publication and mention of the grant of the patent: **03.04.2019**
(21) Application number: 12786767.9
(22) Date of filing: 12.04.2012
(51) Int. Cl.: B61B 13/00, B61B 13/06, B65G 47/52, E01B 25/22

(54) **CARRIAGE SYSTEM HAVING TRACK**
SCHLITTENSYSTEM MIT SPURFÜHRUNG
SYSTÈME DE CHARIOT DOTÉ D'UNE PISTE

(30) Priority: 16.05.2011 JP 2011109715
(43) Date of publication of application: 26.03.2014
(73) Proprietor: Murata Machinery, Ltd., Kyoto-shi, Kyoto 601-8326 (JP)
(72) Inventor: NAGAMINE, Shohei, Ise-shi Mie 516-0005 (JP); HIRATA, Masahiro, Ise-shi Mie 516-0005 (JP)
(74) Representative: Zimmermann, Tankred Klaus
(86) International application number: PCT/JP2012/059975
(87) International publication number: WO 2012/157378

(56) References cited:
- JP-A- 10 100 895
- JP-A- 2001 270 435
- JP-A- 2003 160 047
- JP-A- 2004 314 740
- JP-A- 2006 241 684
- JP-A- 2008 126 743

## Description

### TECHNICAL FIELD

The present invention relates to a rail guided vehicle system that conveys, along a rail, an article such as a container, in which various kinds of substrates for the production of semiconductor apparatuses, etc., are contained.

### BACKGROUND ART

A conventional rail guided vehicle system is known to be a rail guided vehicle system that conveys an article such as a FOUP (Front Opening Unified Pod) and that includes an overhead hoist transport (so-called OHT) travelling on a rail arranged on a ceiling .

Since such a rail guided vehicle system is often used in a clean room, where the cost of space is expensive, it is necessary to make the rail guided vehicle system smaller. One suggested technique is to make the rail guided vehicle system smaller by shortening the length of a connection rail that connects two main rails. For example, an known technique is to include a forcing guide, configured to force a diverging roller that is used when travelling on the connection rail to shift on the connection rail, in order to shorten the length of the connection rail is known (for example, Patent Citation 1).

Here, the case where the vehicle travelling on a N-shaped rail moves from a rail on which the vehicle is travelling, to another rail is considered as an example. First, the vehicle shifts a diverging roller mechanism to the side on which another rail exists. The diverging roller mechanism is arranged in a travelling unit of the vehicle. Then, the vehicle is guided by a diverging guide, which extends from the rail to the middle of a connection rail, and moves to the connection rail. After this, the diverging roller mechanism is shifted to the opposite side in order for the vehicle to be guided by another diverging guide at the merging side. Here, another diverging guide is arranged in the connection rail and at the position opposite to the diverging guide, with a predetermined offset in between (separating area). In this situation, a forcing guide, which is arranged in the separating area, forces the diverging roller mechanism to be shifted toward another diverging guide. Thus, the travelling unit of the vehicle is guided to another rail.

Patent Citation 1: Japanese Laid-Open Patent Application No.2008-126743

JP 2004-314740 A describes a conveyance device with a track according to the preamble of claim 1.

### DISCLOSURE OF INVENTION

### TECHNICAL PROBLEM

In the above-mentioned technique, the diverging roller mechanism can only be shifted in the separating area, where the diverging guide does not exist. However, even if the forcing guide is used, the length of the separating area needs to be equal or greater than the length that is derived by adding the length of one diverging roller mechanism along the travelling direction, to the travelling length in which the vehicle travels during shifting the diverging roller mechanism.

For example, in order to shorten the connection rail, it is necessary to shorten the separating area by shortening the length of the forcing guide in the travelling direction. However, when shortening the length of the forcing guide, the diverging roller needs to be shifted rapidly unless the vehicle is slowed down. Shifting the diverging roller rapidly might cause abnormal operation because a large amount of stress is applied to the diverging roller. In addition, since the impulsion generated when the diverging roller abuts the forcing guide is large, the vibration of the vehicle and the damage of the diverging roller may occur.

As described above, the conventional technique has a limited benefit even if the connection rail can be shortened, and the conventional technique has a technical problem of causing various disadvantages when attempting to shorten the connection rail further.

It is an object of the present invention to provide a rail guided vehicle system that can be made smaller by effectively shortening the connection rail.

This object is achieved by a rail guided vehicle system according to claim 1.

### TECHNICAL SOLUTION

A rail guided vehicle system according to the present invention is a rail guided vehicle system that comprises a rail and vehicles. The rail includes a first main rail, a second main rail, and a connection rail that connects the first main rail to the second main rail.

The vehicles travel while being supported and guided by the rail. A vehicle includes a travelling unit, a diverging roller supporting member, and a position stabilizing roller supporting member. The travelling unit is configured to travel on the rail. The diverging roller supporting member is arranged in the travelling unit. The diverging roller supporting member supports a first diverging roller, and a second diverging roller, that are arranged with a gap in between in a width direction of the travelling unit. The first diverging roller and the second diverging roller shift in the width direction of the travelling unit.

The position stabilizing roller supporting member is arranged in the travelling unit. The position stabilizing roller supporting member supports position stabilizing rollers. The position stabilizing rollers are configured to stabilize a travelling position of the travelling unit such that the position stabilizing rollers do not shift in the width direction of the travelling unit.

The rail includes a first diverging guide, a second diverging guide, and a position stabilizing roller guide. The first diverging guide extends, on one side of the connection rail in the width direction of the connection rail, from the first main rail along an extending direction of the connection rail. The first diverging guide is configured to guide the first diverging roller.

The second diverging guide extends, on another side of the connection rail in the width direction of the connection rail, to the second main rail along the extending direction of the connection rail while having a no-guide zone that does not overlap with the first diverging guide in the extending direction of the connection rail. The second diverging guide is configured to guide the second diverging roller.

The position stabilizing roller guide is arranged in the no-guide zone. The position stabilizing roller guide is configured to guide the position stabilizing rollers in the no-guide zone. Here, the width direction of the travelling unit means the direction crossing the travelling direction of the vehicle.

According to the present invention, the position stabilizing roller guide configured to guide the position stabilizing rollers is arranged in the no-guide zone. The no-guide zone is where the diverging guide of the rail is not provided. By arranging such a position stabilizing roller guide in the no-guide zone, the position stabilizing roller can be guided by the position stabilizing roller guide, and thus the position of the vehicle can be stabilized.

If the position of the vehicle can be stabilized in the no-guide zone, the no-guide zone can be extended to the zone where the first diverging guide and the second diverging guide should be arranged in the conventional techniques. This is the zone where the position of the vehicle should be stabilized by guiding the first diverging roller and the second diverging roller to the first diverging guide and the second diverging guide. Using the present invention, while the no-guide zone has a sufficient length, lengthening of the entirety of the connection rail can be avoided. The preferable movement of the vehicle between the first main rail and the second main rail can be performed, and the shortening of the connection rail can also be realized.

As described above, according to the rail guided vehicle system of the present invention, the system can be made smaller by shortening the connection rail.

The vehicle may include a main body member and a plurality of bogie truck units that are arranged to rotate in a horizontal direction relative to the main body member. The travelling unit, the diverging roller supporting member, and the position stabilizing roller supporting member may be arranged in each of the plurality of bogie truck units.

In this structure, since the plurality of bogie truck units are arranged in the vehicle, the vehicle can be larger. Specifically, when the vehicle reaches a curve of the rail, each of the plurality of bogie truck units rotates along the horizontal direction with a different angle from those of other bogie truck units, thus the preferable travelling of the vehicle can be realized.

The position stabilizing roller may include a first roller member and a second roller member. The first roller member and the second roller member are attached with a gap in between in the width direction of the travelling unit. The position stabilizing roller guide includes a first roller guide member and a second roller guide member. The first roller guide member extends along the extending direction on one side of the connection rail in the width direction of the connection rail and in the no-guide zone. The first roller guide member is configured to guide the first roller member. The second roller guide member extends along the extending direction on another side of the connection rail in the width direction of the connection rail in the no-guide zone. The second roller guide member is configured to guide the second roller member.

In this structure, in the vehicle reaching the no-guide zone from the first diverging guide, the first roller member is first guided by the first roller guide member. Then, after the vehicle moves across the end of the first roller guide member, the second roller member is guided by the second roller guide member. With the first roller member, the second roller member, the first roller guide member, and the second roller guide member, the fluctuations in the right and left directions and the mismatches of the position can be inhibited. As a result, the position of the vehicle in the no-guide zone can better be stabilized.

The rail may be arranged on a ceiling or in the vicinity of the ceiling. The rail includes a first travelling plane portion and a second travelling plane portion at both sides of the lower portion of the rail in the width direction of the rail. The first travelling plane portion and the second travelling plane portion are arranged with a gap in between. The first roller guide member rises in a planar manner from a position closer to the gap of the first travelling plane portion of the connection rail. The second roller guide member rises in a planar manner from a position closer to the gap of the second travelling plane portion of the connection rail. The first roller member and the second roller member are guided by abutting the first roller guide member and the second roller guide member, respectively, from the outer sides of the connection rail in the width direction of the connection rail.

In this structure, each of the first roller member and the second roller member is guided by abutting the first roller guide member and the second roller guide member, respectively. Specifically, the first roller member is guided while the first roller guide member abuts the first roller member from the inner side of the connection rail in the width direction of the connection rail. On the other hand, the second roller member is guided while the second roller guide member abuts the second roller member from the inner side of the connection rail in the width direction of the connection rail. Therefore, the position of the vehicle in the no-guide zone can better be stabilized.

### BRIEF DESCRIPTION OF DRAWINGS

Fig. 1 is a plan view showing the overall structure of the rail guided vehicle system according to the first embodiment.
Fig. 2 is a side view showing the structure of the vehicle according to the first embodiment.
Fig. 3 is a perspective view showing the transferring operation of the vehicle according to the first embodiment.
Fig. 4 is a perspective view showing the lateral transferring operation of the vehicle according to the first embodiment.
Fig. 5 is a plan view showing travelling of the vehicle according to the first embodiment on the connection rail.
Fig. 6 is a cross-sectional view showing the structure of the travelling unit according to the first embodiment together with the rail.
Fig. 7 is a cross-sectional view showing the structure of the travelling unit according to the first embodiment together with the rail (Part 2).
Fig. 8 is a cross-sectional view showing the structure of the travelling unit according to the first embodiment together with the rail (Part 3).
Fig. 9 is a cross-sectional view showing the structure of the travelling unit according to the first embodiment together with the rail (Part 4).
Fig. 10 is a cross-sectional view showing the structure of the travelling unit of the vehicle according to the comparative example, together with the rail.
Fig. 11 is a plan view showing the zone where the position of the vehicle according to the comparative example is stable and the zone where the position of the vehicle is unstable.
Fig. 12 is a plan view showing a diverging roller shifting zone for the vehicle according to the comparative example.

### EMBODIMENTS

The embodiments of the present invention will be explained below based on the figures.

### <First Embodiment>

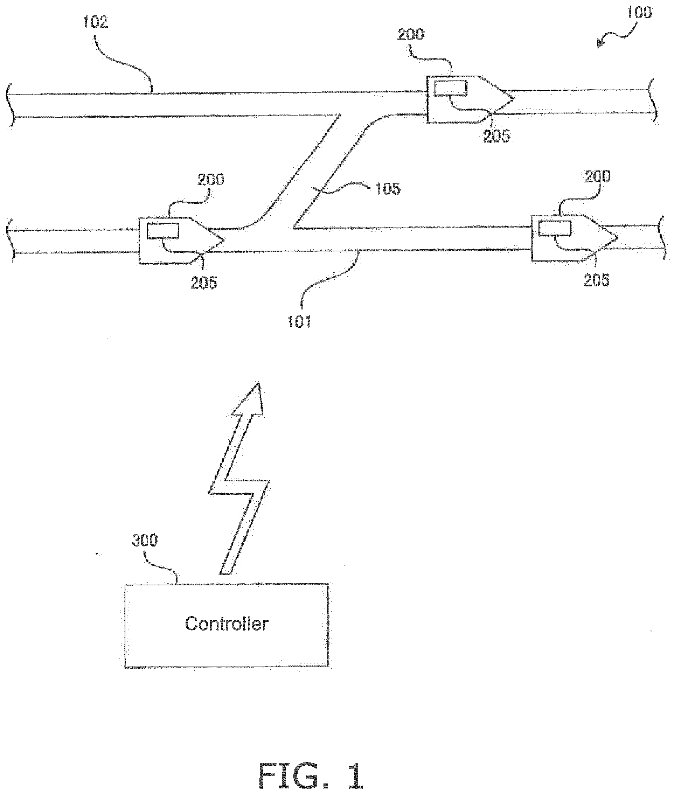

First, the overall structure of the rail guided vehicle system according to the first embodiment will be explained, referring to Fig. 1. Fig. 1 is a plan view showing the overall structure of the rail guided vehicle system according to the first embodiment.

In Fig. 1, the rail guided vehicle system according to the present embodiment comprises a rail 100, vehicles 200, and a controller 300.

The rail 100 is arranged on a ceiling and made of metal such as aluminum, stainless steel, etc. The rail 100 includes a first main rail 101 and a second main rail 102, and a connection rail 105. The first main rail 101 and the second main rail 102 arranged parallel to each other. The connection rail 105 connects the first main rail 101 to the second main rail 102. Thus, the vehicles 200 travelling on the first main rail 101 can move to the second main rail 102 by travelling on the connection rail 105.

A plurality of vehicles 200 are arranged on the rail 100 and can convey FOUPs, as articles to be conveyed, by travelling along the rail 100.

In addition, each of the vehicles 200 includes an on-board controller 205. The on-board controller 205 receives conveying instructions from the controller 300, and controls the travelling of the vehicle 200. It should be noted that the on-board controller 205 not only controls the travelling of the vehicle 200, but also has a function of controlling all of the apparatuses included in the vehicle 200.

The controller 300 includes an arithmetic circuit, a memory, etc. and is configured to give the conveying instructions to the vehicle 200 via the on-board controller 205.

Although not shown in the figure, a shelf (for example, a buffer, a port, etc.) storing the FOUP temporarily and a semiconductor fabricating apparatus are arranged in the location along the rail 100.

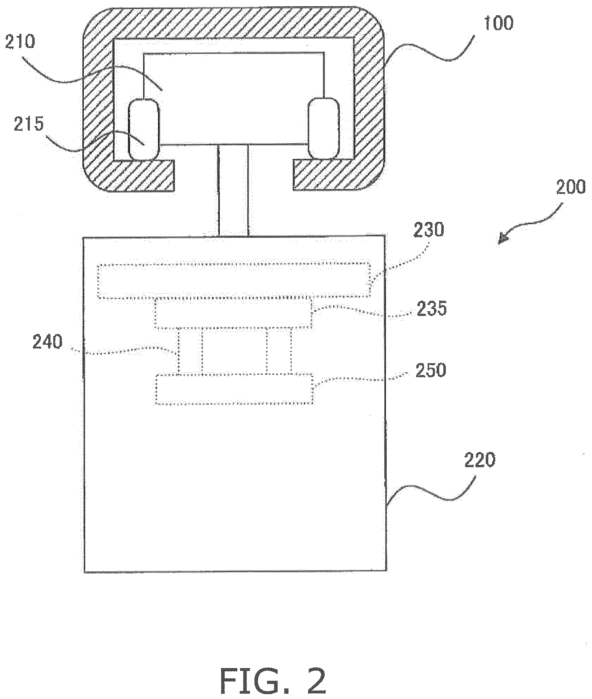

Next, the further detailed structure of the vehicle 200 will be explained referring to Fig. 2. Fig. 2 is a side view showing the structure of the vehicle according to the first embodiment.

In Fig. 2, the vehicle 200 includes a travelling unit 210, a main body member 220, a moving unit 230, a hoist unit 235, a hoist belt 240, and a gripping unit 250. Diverging rollers and position stabilizing rollers, which are described later, are omitted in Fig. 2 for the convenience of this explanation.

The vehicle 200 travels along the rail 100 while travelling rollers 215 are rolled by a driving power of the travelling unit 210, e.g., a linear motor. The main body member 220 is suspended on the bottom plane of the travelling unit 210.

The moving unit 230 is attached to the main body member 220. The moving unit 230 can move to the side (namely, in the right and left directions in Fig. 2) of the rail 100. The hoist unit 235 is attached to the bottom plane of the moving unit 230.

The gripping unit 250 that grips the FOUP is attached to the bottom plane of the hoist unit 235 by the hoist belt 240. The gripping unit 250 can ascend or descend relative to the main body member 220 by winding off or reeling in the hoist belt 240.

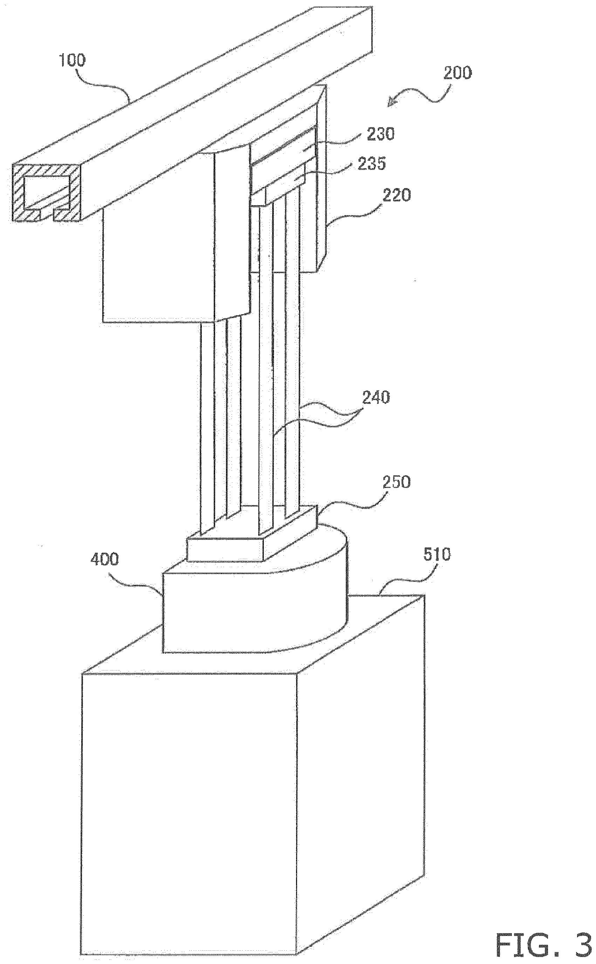

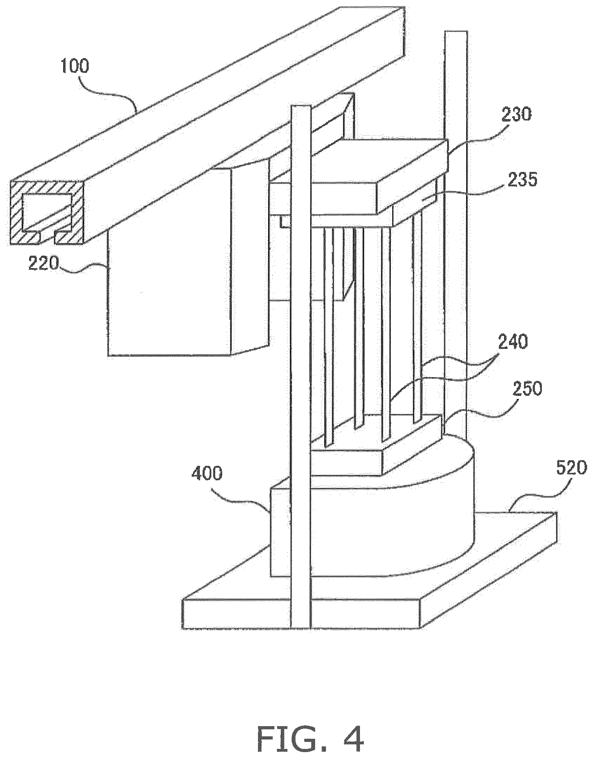

Next, the method of transferring the FOUP by the vehicle will be explained referring to Figs. 3 and 4. Figs. 3 and 4 are perspective views showing the method of transferring the FOUP by the vehicle according to the first embodiment.

In Figure 3, when the vehicle 200 transfers the FOUP 400 on the port 510 located right below the rail 100, the vehicle 200 first travels on the rail 100 and stops over the FOUP 400 arranged on the port 510.

Next, as shown in Fig. 3, the hoist unit 235 winds off the hoist belt 240 and the gripping unit 250 then descends to the location of the FOUP 400. The gripping unit 250 then grips the FOUP 400.

After the gripping unit 250 grips the FOUP 400, the hoist unit 235 reels the hoist belt 240 so that the gripping unit 250 and the FOUP 400 ascend to the location of the main body member 220. Then, the vehicle 200 travels again on the rail 100 and the FOUP 400 is conveyed.

The example shown in Fig. 4 shows the case when the FOUP 400 is arranged at a side buffer 520 located off the side of the rail 100. In this case, after the moving unit 230 moves to the side of the rail 100, the hoist unit 235 winds off the hoist belt 240 and the gripping unit 250 descends to the location of the FOUP 400. With such an operation, it is possible to perform a lateral transfer of the FOUP 400 located off the side of the rail 100.

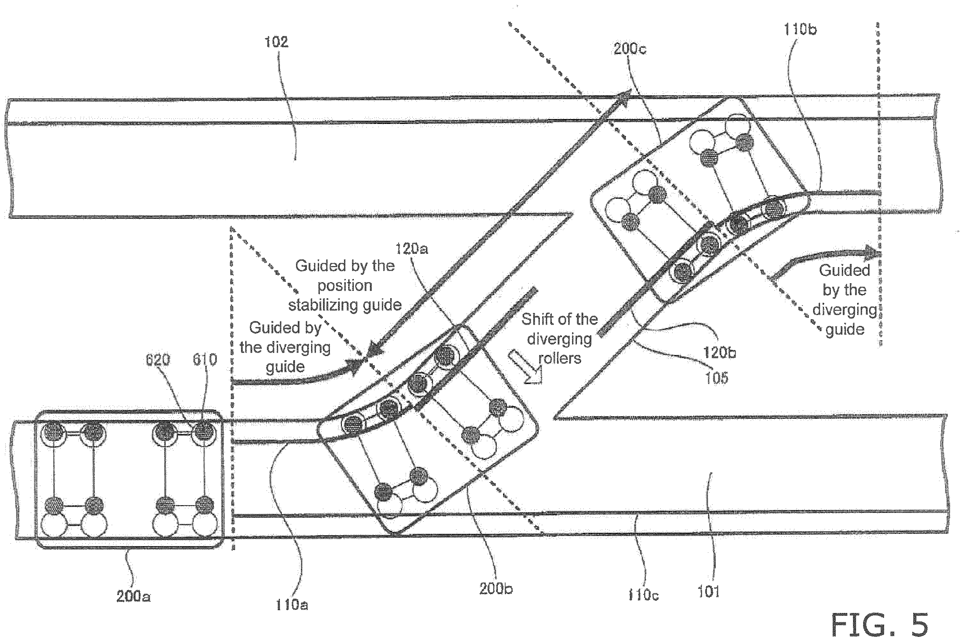

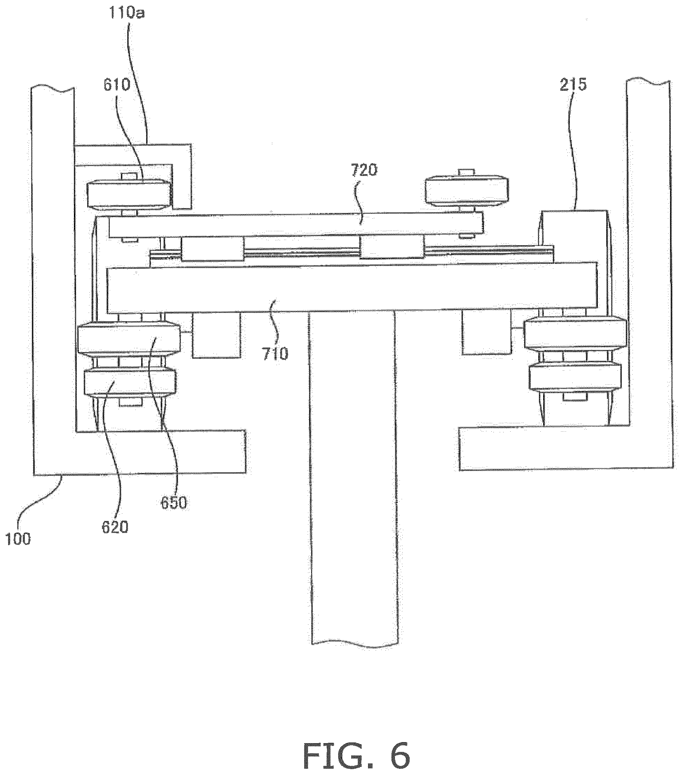

Next, the method of travelling on the connection rail by the vehicle according to the present embodiment, and the specific structures of the vehicle and the rail that realize preferable travelling on the connection rail, will be explained referring to Figs. 5 through 9. Fig. 5 is a plan view showing the travelling of the vehicle according to the first embodiment on the connection rail. In addition, Figs. 6 through 9 are cross-sectional views showing the structure of the travelling unit according to the first embodiment together with the rail. Figs. 6 through 9 show the vehicle viewed from the back side of the vehicle in the travelling direction.

The operation performed when the vehicle 200 travels from the first main rail 101 to the connection rail 105 and then moves to the second main rail 102 will be explained below, referring to Fig. 5. In the vehicle 200 according to the present embodiment, diverging rollers 610 and position stabilizing rollers 620 are arranged in each of the bogie truck units.

As shown in Fig. 5 and Fig. 6, when the vehicle 200a travelling on the first main rail 101 reaches the point where a diverging guide 110a is arranged, the diverging rollers 610 are guided by the diverging guide 110a. A pair of the diverging rollers 610 are supported by a diverging roller supporting member 720 that is configured to shift in the direction crossing the travelling direction of the vehicle 200 (namely, the right and left directions in Fig. 6). Here, the vehicle 200a is about to move to the connection rail 105. The connection rail 105 is located to the left side of the first main rail 101 in the travelling direction. The diverging roller supporting member 720 is shifted to the left side at the point where the diverging guide 110a is arranged. In such a situation, the left side one of the pair of the diverging rollers 610 is positioned to be guided by the diverging guide 110a. In this manner, the vehicle 200 is guided from the first main rail 101 to the connection rail 105.

On the other hand, when the vehicle 200 is not guided to the connection rail 105, the diverging roller supporting member 720 is shifted to the right side. In such a situation, the diverging rollers 610 are not guided by the diverging guide 110a at the side of the connection rail 105 but by a diverging guide 110c at the side for travelling straight. Thus, the vehicle 200 is kept travelling on the first main rail 101.

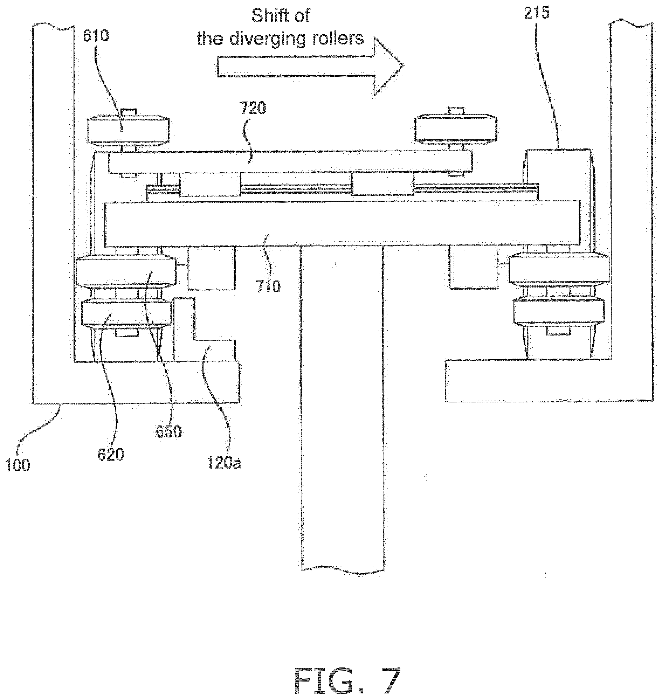

As shown in Fig. 5 and Fig. 7, in the vehicle 200b having moved to the connection rail 105 and reaching the point where a position stabilizing roller guide 120a is arranged, the position stabilizing rollers 620 at the left side are guided by the position stabilizing roller guide 120a. A pair of the position stabilizing rollers 620 are supported by the position stabilizing roller supporting member 710, together with a pair of side rollers 650. The position stabilizing rollers 620 are guided by the position stabilizing roller guide 120a, and are configured to stabilize the position of the vehicle 200.

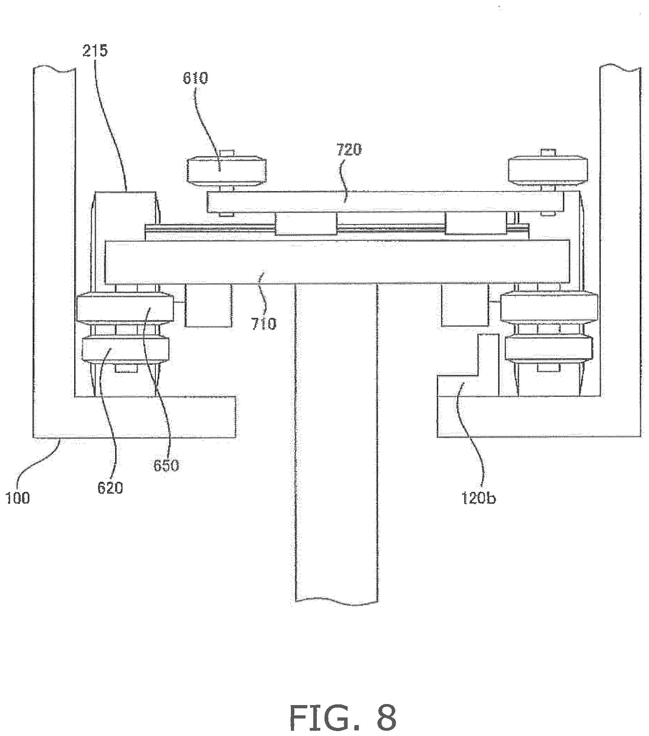

As shown in Fig. 5 and Fig. 8, when the vehicle 200b reaches the point where the position stabilizing roller guide 120b is arranged, the position stabilizing rollers 620 at the right side (namely, the rollers at the side opposite to the side where the rollers that were guided before are arranged) are guided by the position stabilizing roller guide 120b. Although the position stabilizing roller guides 120a and 120b do not overlap with each other in the present embodiment, a zone where both the position stabilizing roller guides 120a and 120b are overlapping may exist.

In the zone where the position stabilizing rollers 620 are guided by each of the position stabilizing roller guides 120a and 120b, the diverging roller supporting member 720 is released (namely, the diverging roller supporting member 720 is in the state in which the diverging roller supporting member 720 can be shifted). This is because the diverging guide 110 configured to guide the diverging rollers 610 is not arranged. Therefore, the diverging roller supporting member 720 is shifted to the right side in the zone where the position stabilizing rollers 620 are guided.

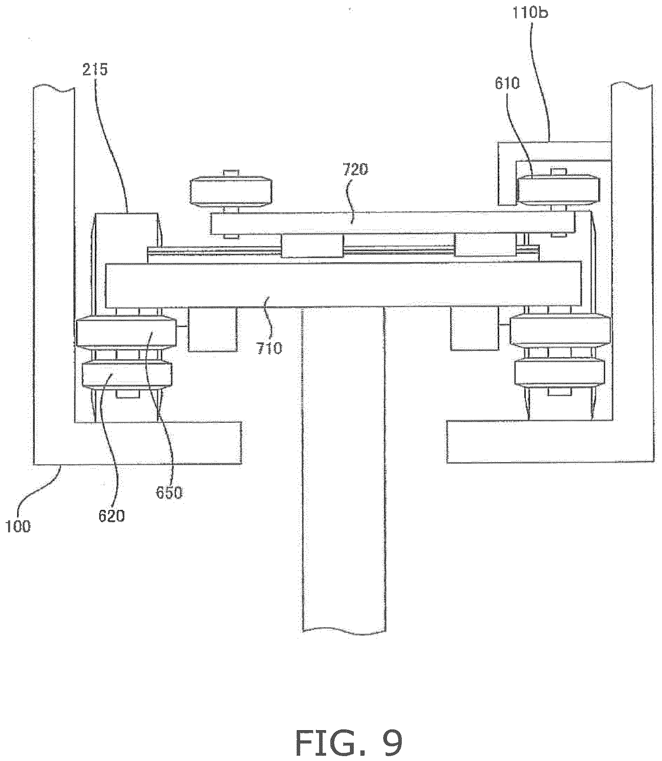

As shown in Fig. 5 and Fig. 9, when the vehicle 200c reaches the point where the diverging guide 110b exists after passing through the zone where the position stabilizing roller guide 120b exists, the diverging roller supporting member 720 is shifted to the right side. As a result, the diverging rollers 610 at the right side are guided by the diverging guide 110b. Therefore, the vehicle 200 can move from the connection rail 105 to the second main rail 102.

The movement of the vehicle from the first main rail 101 to the second main rail 102 can be preferably realized with the rail guided vehicle system according to the present embodiment, since the diverging rollers 610 and the position stabilizing rollers 620 are respectively guided by the diverging guide 110 and the position stabilizing roller guide 120. In the present embodiment, the position stabilizing rollers 620 are guided by the position stabilizing roller guide 120 in the no-guide zone, the no-guide zone being where the diverging guide 110 is not arranged. Therefore, the position of the vehicle 200 can be stabilized even in the no-guide zone.

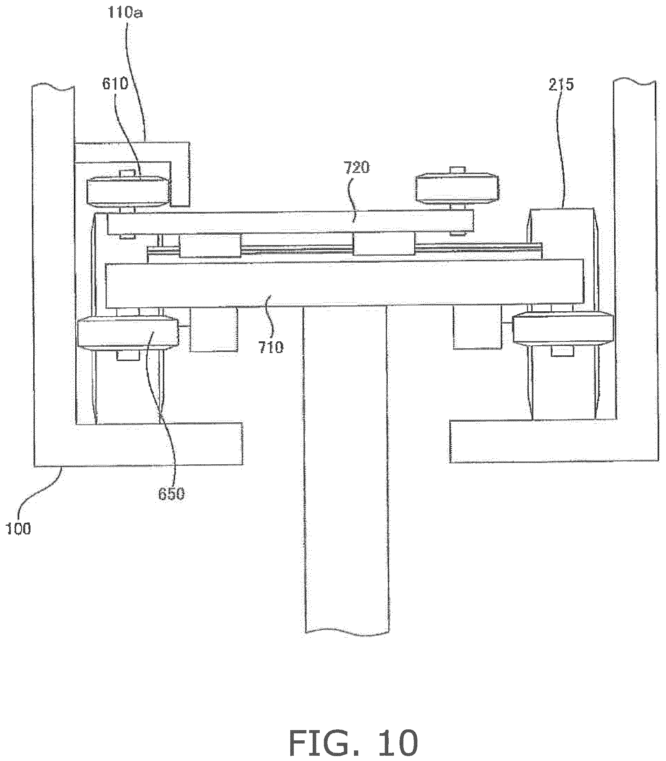

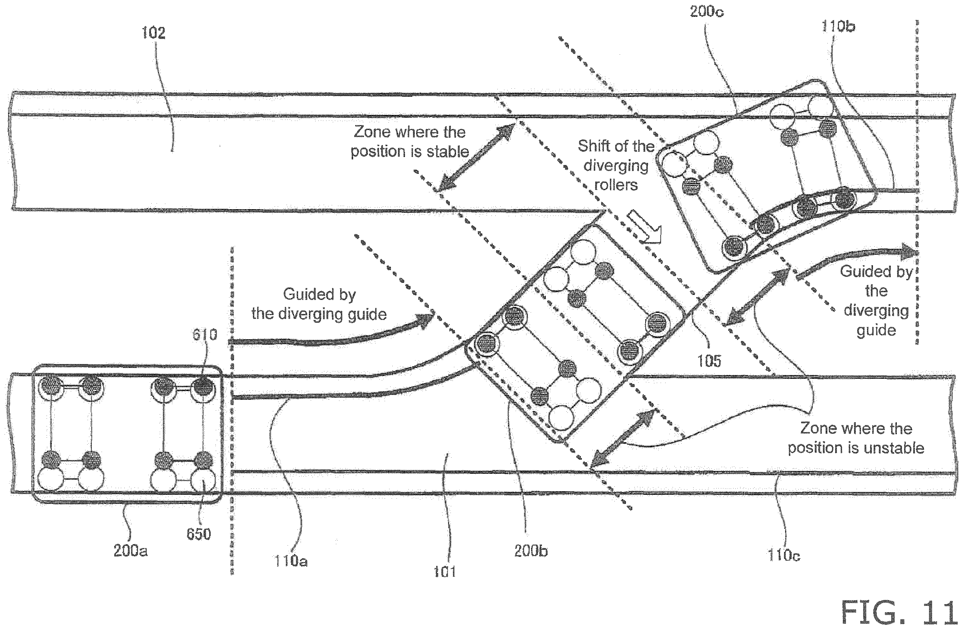

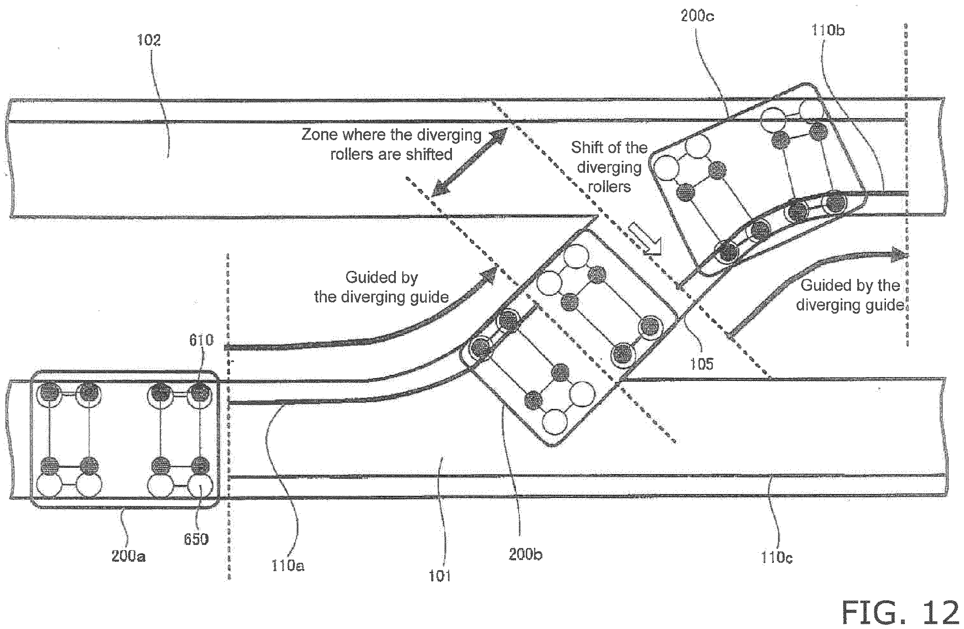

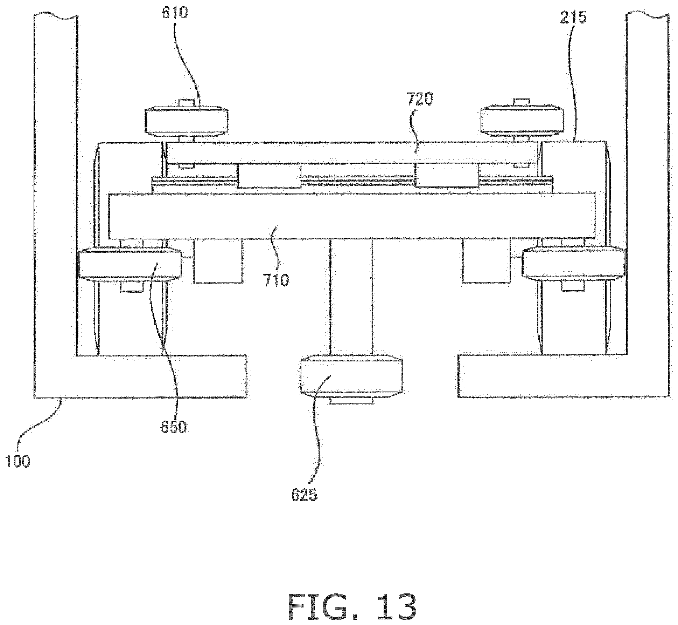

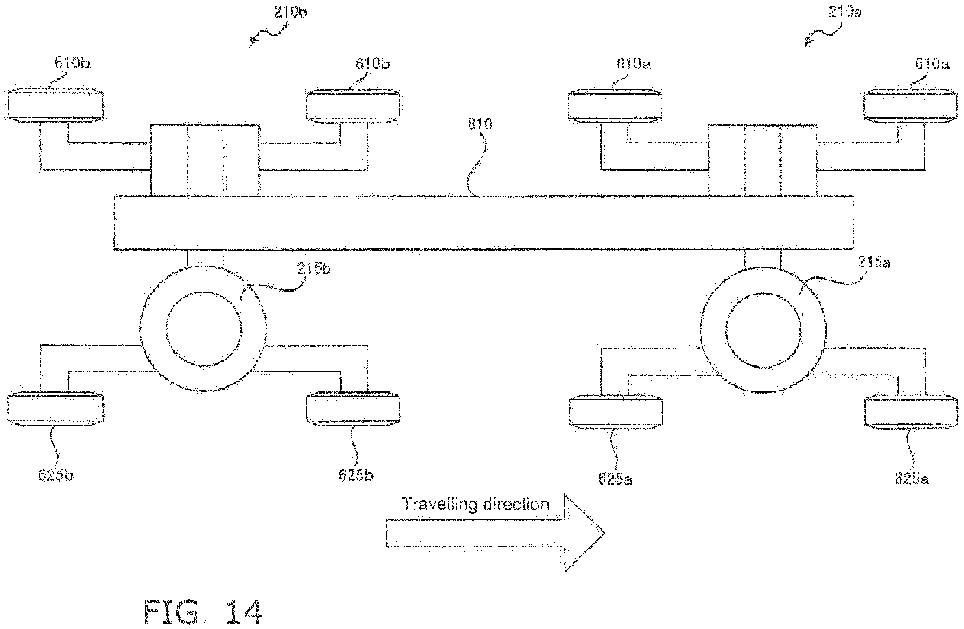

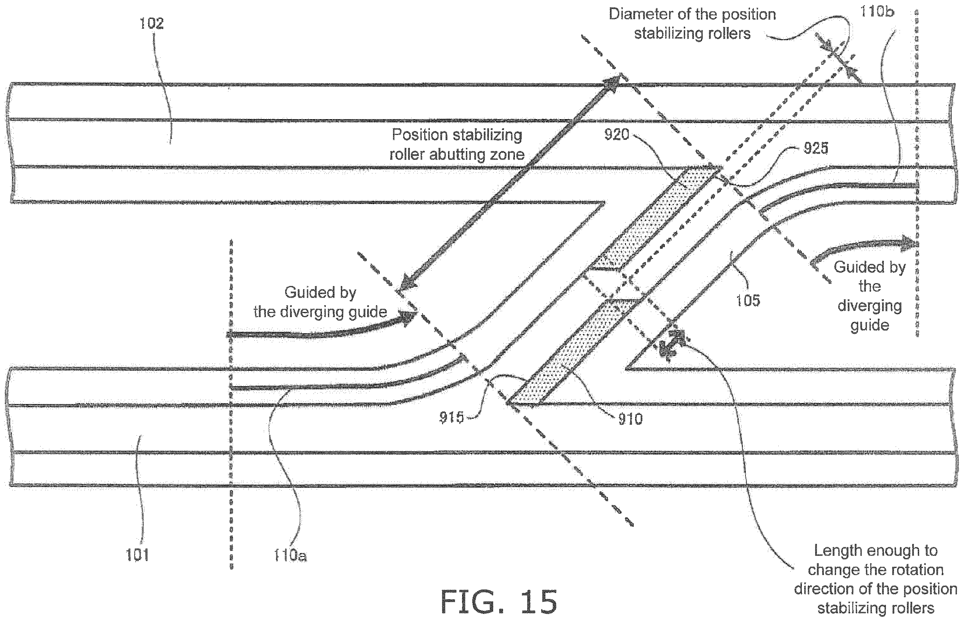

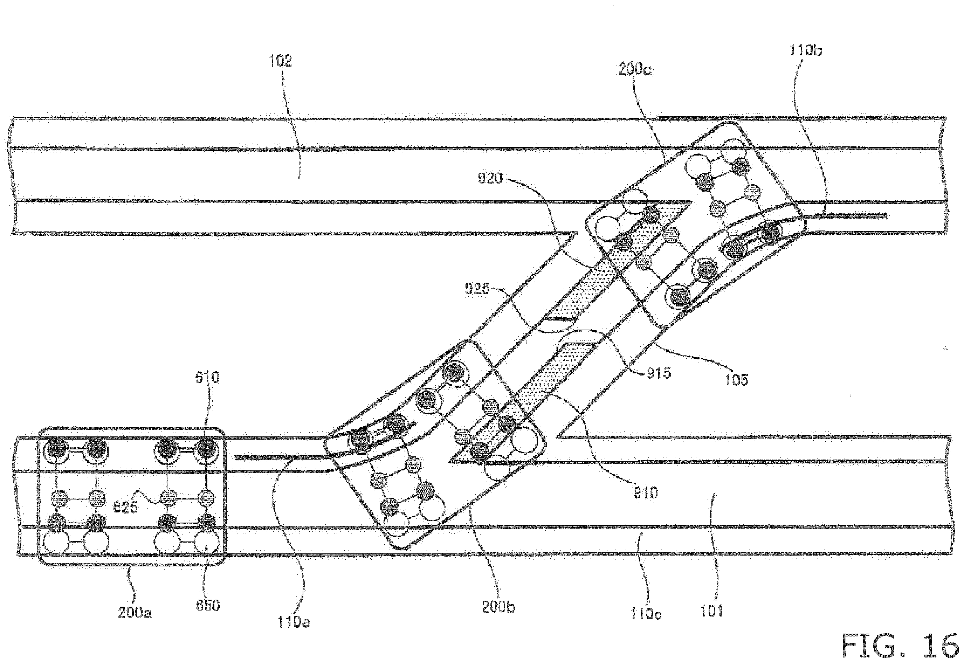

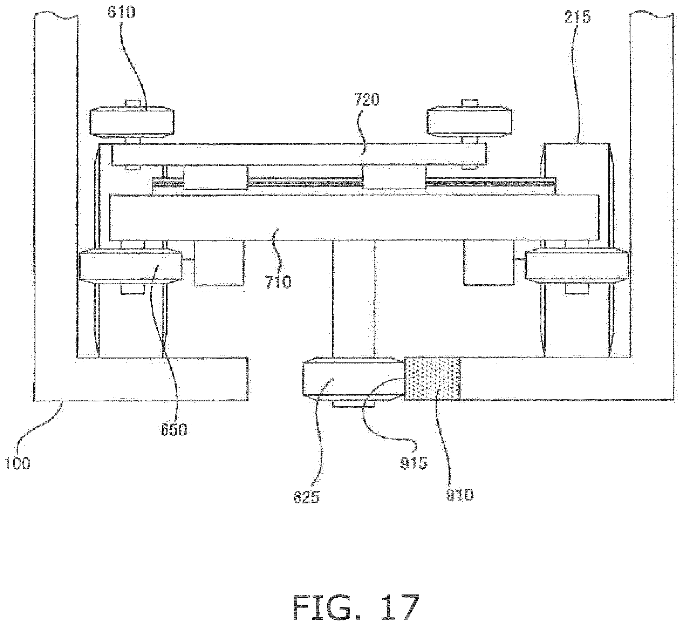

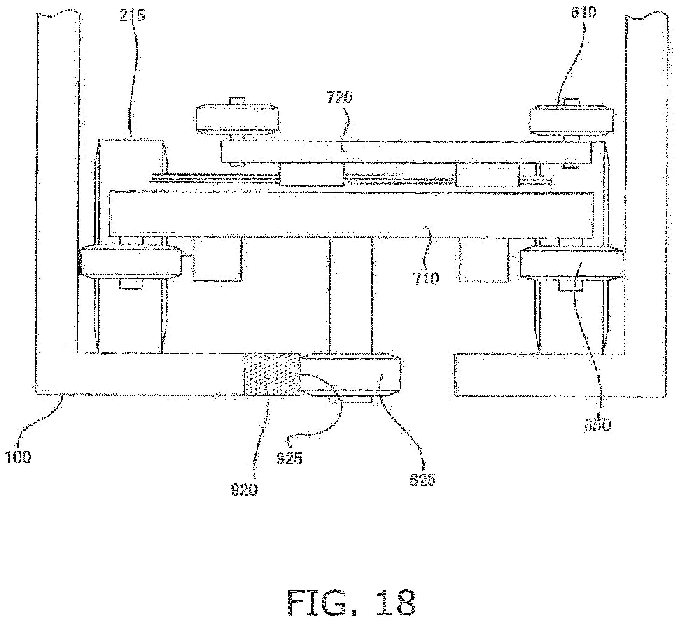

The rail guided vehicle system that does not include the above-described position stabilizing rollers 620 and the position stabilizing roller guide 120 will be explained, referring to Figs. 10 through 12. Fig. 10 is a cross-sectional view showing the structure of the travelling unit of the vehicle together with the rail, according to the comparative example. Fig. 11 is a plan view showing the zone where the position of the vehicle according to the comparative example is stable, and the zone where the position of the vehicle is unstable. Fig. 12 is a plan view showing a diverging roller shifting zone for the vehicle according to the comparative example.

As shown in Fig. 10 and Fig. 11, in the rail guided vehicle system according to the comparative example, the position stabilizing rollers 620 and the position stabilizing roller guide 120 are absent. Thus, in the zone where both side rollers 650 located at the right and left sides abut rail walls (namely, the inner side plane of the rail 100) in the no-guide zone where the diverging guide 110 is absent, the position of the vehicle 200 is stable. However, as shown in Fig. 11, in the no-guide zone where the diverging guide 110 is absent, there is a zone where the rail wall exists only at one side in the travelling direction. In this zone, the side rollers 650 abut only one of the rail walls. Thus, in the above-described zone, since the position cannot be stabilized by the side rollers 650, it is hard to stabilize the position of the vehicle 200. Therefore, in order to realize the stable travelling of the vehicle 200 in the connection rail 105, it is required to lengthen the diverging guide 110.

As shown in Fig. 12, if the diverging guide 110 is lengthened in the rail guided vehicle system according to the comparative example, the length of the zone where the diverging rollers 610 are shifted (namely, the no-guide zone where the diverging guide 110 is not arranged) becomes shorter. Therefore, there might be the case in which it is hard for the diverging rollers 610 to be shifted properly. In addition, in such a case, the use of a forcing guide, configured to force the diverging rollers 610 to be shifted, is possible. However, even if the forcing guide is used, the diverging rollers 610 need to be shifted rapidly unless the vehicle 200 is slowed down. Shifting the diverging rollers 610 rapidly might cause abnormal operations because the diverging rollers 610 might receive a large force. In addition, since, if the diverging rollers 610 are rapidly shifted, the impulsion generated when the diverging rollers 610 abut the diverging guide 110 becomes large, the vibration of the vehicle 200 and/or the damages of the diverging rollers 610 might occur.

On the other hand, the rail guided vehicle system according to the present embodiment shown in Figs. 5 through 9 includes the position stabilizing rollers 620 and the position stabilizing roller guide 120. As a result, the no-guide zone, where the diverging guide 110 is not arranged, can be lengthened. Thus, the shifting operation of the diverging rollers 610 can reliably and safely be performed.

As it can be seen by comparing Fig. 5 with Fig. 11 and Fig. 12, in the rail guided vehicle system according to the present embodiment, while the no-guide zone is longer than that of the rail guided vehicle system according to the comparative example, the lengths of the connection rail 105 are same. Namely, the rail guided vehicle system according to the present embodiment can prevent the connection rail 105 from becoming longer even if the no-guide zone is lengthened. Thus, the connection rail 105 can be shortened even if the no-guide zone is lengthened.

As explained above, with the rail guided vehicle system according to the present embodiment, the position stabilizing rollers 620 makes possible the stable travelling on the connection rail. In addition, the position stabilizing rollers 620 make the system smaller by shortening the length of the connection rail 105.

The present invention is not limited to the above-described embodiment and can be arbitrarily changed without departing from the scope or concept of the invention that can be read from the claims and the entire specification. The rail guided vehicle system including such changes is also within the scope of the present invention.

## Claims

1. A rail guided vehicle system comprising:
a rail (100) including a first main rail (101), a second main rail (102), and a connection rail (105) connecting the first main rail (101) to the second main rail (102), and
one or more vehicles (200) configured to travel while being supported and guided by the rail (100),
wherein the vehicle (200) includes:
travelling rollers (215) travelling along the rail (100);
side rollers (650) located at the right and left sides abutting rail walls;
a travelling unit (210) configured to travel on the rail (100);
a first diverging roller and a second diverging roller (610) arranged with a gap, the gap being in between the first diverging roller and the second diverging roller (610) in a width direction of the travelling unit (210);
a diverging roller supporting member (720) arranged in the travelling unit (210), the diverging roller supporting member (720) supporting the first diverging roller and the second diverging roller (610) such that the first diverging roller and the second diverging roller (610) are shiftable in the width direction of the travelling unit (210); and
wherein the rail (100) includes:
a first diverging guide (110a) extending, on one side of the connection rail (105) in a width direction of the connection rail (105), from the first main rail (101) along an extending direction of the connection rail (105), the first diverging guide (110a) being configured to guide the first diverging roller (610);
a second diverging guide (110b) extending, on another side of the connection rail (105) in the width direction of the connection rail (105), to the second main rail (102) along the extending direction of the connection rail (105) while having a no-guide zone being arranged non-overlapping with the first diverging guide (110a) in the extending direction of the connection rail (105), the second diverging guide (110b) being configured to guide the second diverging roller (610), wherein the no-guide zone is a zone where no diverging guide is provided;
**characterized in that**
the vehicle (200) includes:
position stabilizing rollers (620, 625) configured to stabilize a travelling position of the travelling unit (210); and
a position stabilizing roller supporting member (710) arranged in the travelling unit (210), the position stabilizing roller supporting member (710) supporting the position stabilizing rollers (620, 625) such that the position stabilizing rollers (620, 625) are non-shiftable in the width direction of the travelling unit (210), and
the rail (100) includes:
a position stabilizing roller guide (120) arranged in the no-guide zone, the position stabilizing roller guide (120) being configured to guide the position stabilizing rollers (620, 625) in the no-guide zone.

2. The rail guided vehicle system according to claim 1, wherein
the vehicle (200) includes a main body member (220) and a plurality of bogie truck units arranged so as to rotate in a horizontal direction of the main body member (220), and
the travelling unit (210), the diverging roller supporting member (720), and the position stabilizing roller supporting member (710) are arranged in each of the plurality of bogie truck units.

3. The rail guided vehicle system according to claim 1, wherein
the position stabilizing roller (620, 625) includes a first roller member and a second roller member, the first roller member and the second roller member being attached with a gap in between in the width direction of the travelling unit (210), and
the position stabilizing roller guide (120) includes:
a first roller guide member extending along the extending direction on one side of the connection rail (105) in the width direction of the connection rail (105) and in the no-guide zone, the first roller guide member being configured to guide the first roller member and
a second roller guide member extending along the extending direction on another side of the connection rail (105) in the width direction of the connection rail (105) and in the no-guide zone, the second roller guide member being configured to guide the second roller member.

4. The rail guided vehicle system according to claim 2, wherein
the position stabilizing roller includes a first roller member and a second roller member, the first roller member and the second roller member being attached with a gap in between in the width direction of the travelling unit (210), and
the position stabilizing roller guide (120) includes:
a first roller guide member (120a) extending along the extending direction in the no-guide zone, on one side of the connection rail (105) in the width direction of the connection rail (105), the first roller guide member (120a) being configured to guide the first roller member and
a second roller guide member (120b) extending along the extending direction in the no-guide zone, on another side of the connection rail (105) in the width direction of the connection rail (105), the second roller guide member (120b) being configured to guide the second roller member.

5. The rail guided vehicle system according to claim 3 or 4, wherein
the rail (100) is arranged on a ceiling or in the vicinity of the ceiling, the rail (100) including a first travelling plane portion and a second travelling plane portion at both sides of the lower portion of the rail (100) in a width direction of the rail (100), the first travelling plane portion and the second travelling plane portion being arranged with a gap in between,
the first roller guide member rises in a planar manner from a position closer to the gap of the first travelling plane portion of the connection rail (105),
the second roller guide member rises in a planar manner from a position closer to the gap of the second travelling plane portion of the connection rail (105), and the first roller member and the second roller member are guided by abutting the first roller guide member and the second roller guide member, respectively, from the outer sides of the connection rail (105) in the width direction of the connection rail (105).

## Patentansprüche

1. Ein schienengeführtes Fahrzeugsystem, das folgende Merkmale aufweist:
eine Schiene (100), die eine erste Hauptschiene (101), eine zweite Hauptschiene (102) und eine Verbindungsschiene (105) umfasst, welche die erste Hauptschiene (101) mit der zweiten Hauptschiene (102) verbindet, und
ein oder mehrere Fahrzeuge (200), die dazu ausgebildet sind, sich zu bewegen, während dieselben von der Schiene (100) getragen und geführt werden,
wobei das Fahrzeug (200) Folgendes umfasst:
Bewegungsrollen (215), die sich entlang der Schiene (100) bewegen;
Seitenrollen (650), die sich an der rechtsseitigen und linksseitigen Anstoßschienenwand befinden;
eine Bewegungseinheit (210), die dazu ausgebildet ist, sich auf der Schiene (100) zu bewegen;
eine erste divergierende Rolle und eine zweite divergierende Rollte (610), die mit einem Zwischenraum angeordnet sind, wobei der Zwischenraum in einer Breitenrichtung der Bewegungseinheit (210) zwischen der ersten divergierenden Rolle und zweiten divergierenden Rolle (610) liegt;
ein Divergierende-Rolle-Tragebauglied (720), das in der Bewegungseinheit (210) angeordnet ist, wobei das Divergierende-Rolle-Tragebauglied (720) die erste divergierende Rolle und die zweite Rolle (610) derart trägt, dass die erste divergierende Rolle und die zweite divergierende Rolle (610) in der Breitenrichtung der Bewegungseinheit (210) verschiebbar sind;
wobei die Schiene (100) Folgendes umfasst:
eine erste divergierende Führung (110a), die sich auf einer Seite der Verbindungsschiene (105) in einer Breitenrichtung der Verbindungsschiene (105) von der ersten Hauptschiene (101) entlang einer Erstreckungsrichtung der Verbindungsschiene (105) erstreckt, wobei die erste divergierende Führung (110a) dazu ausgebildet ist, die erste divergierende Rolle (610) zu führen;
eine zweite divergierende Führung (110b), die sich auf einer anderen Seite der Verbindungsschiene (105) in der Breitenrichtung der Verbindungsschiene (105) entlang der Erstreckungsrichtung der Verbindungsschiene (105) zu der zweiten Hauptschiene (102) erstreckt, während dieselbe einen Nichtführungsbereich aufweist, der nichtüberlappend zu der ersten divergierenden Führung (110a) in der Erstreckungsrichtung der Verbindungsschiene (105) angeordnet ist, wobei die zweite divergierende Führung (110b) dazu ausgebildet ist, die zweite divergierende Rolle (610) zu führen, wobei der Nichtführungsbereich ein Bereich ist, in dem keine divergierende Führung bereitgestellt ist;
**dadurch gekennzeichnet, dass**
das Fahrzeug (200) Folgendes umfasst:
Positionsstabilisierungsrollen (620, 625), die dazu ausgebildet sind, eine Bewegungsposition der Bewegungseinheit (210) zu stabilisieren; und
ein Positionsstabilisierungsrollentragebauglied (710), das in der Bewegungseinheit (210) angeordnet ist, wobei das Positionsstabilisierungsrollentragebauglied (710) die Positionsstabilisierungsrollen (620, 625) derart trägt, dass die Positionsstabilisierungsrollen (620, 625) in der Breitenrichtung der Bewegungseinheit (210) nicht verschiebbar sind, und
die Schiene (100) Folgendes umfasst:
eine Positionsstabilisierungsrollenführung (120), die in dem Nichtführungsbereich angeordnet ist, wobei die Positionsstabilisierungsrollenführung (120) dazu ausgebildet ist, die Positionsstabilisierungsrollen (620, 625) in dem Nichtführungsbereich zu führen.

2. Das schienengeführte Fahrzeugsystem gemäß Anspruch 1, wobei
das Fahrzeug (200) ein Hauptkörperbauglied (220) und eine Mehrzahl von Fahrgestelleinheiten umfasst, die dahingehend angeordnet sind, sich in der Horizontalrichtung des Hauptkörperbaugliedes (220) zu drehen, und
die Bewegungseinheit (210), das Divergierende-Rolle-Tragebauglied (720) und das Positionsstabilisierungsrollentragebauglied (710) in jeder der Mehrzahl von Fahrgestelleinheiten angeordnet sind.

3. Das schienengeführte Fahrzeugsystem gemäß Anspruch 1, wobei
die Positionsstabilisierungsrolle (620, 625) ein erstes Rollenbauglied und zweites Rollenbauglied umfasst, wobei das erste Rollenbauglied und das zweite Rollenbauglied mit einem Zwischenraum in der Breitenrichtung der Bewegungseinheit (210) angebracht sind, und
die Positionsstabilisierungsrollenführung (120) Folgendes umfasst:
ein erstes Rollenführungsbauglied, das sich entlang der Erstreckungsrichtung auf einer Seite der Verbindungsschiene (105) in der Breitenrichtung der Verbindungsschiene (105) und in dem Nichtführungsbereich erstreckt, wobei das erste Rollenführungsbauglied dazu ausgebildet ist, das erste Rollenbauglied zu führen, und
ein zweites Rollenführungsbauglied, das sich entlang der Erstreckungsrichtung auf einer anderen Seite der Verbindungsschiene (105) in der Breitenrichtung der Verbindungsschiene (105) und in dem Nichtführungsbereich erstreckt, wobei das zweite Rollenführungsbauglied dazu ausgebildet ist, das zweite Rollenbauglied zu führen.

4. Das schienengeführte Fahrzeugsystem gemäß Anspruch 2, wobei
die Positionsstabilisierungsrolle ein erstes Rollenbauglied und ein zweites Rollenbauglied umfasst, wobei das erste Rollenbauglied und das zweite Rollenbauglied mit einem Zwischenraum in der Breitenrichtung der Bewegungseinheit (210) angebracht sind, und
die Positionsstabilisierungsrollenführung (120) Folgendes umfasst:
ein erstes Rollenführungsbauglied (120a), das sich entlang der Erstreckungsrichtung in dem Nichtführungsbereich auf einer Seite der Verbindungsschiene (105) in der Breitenrichtung der Verbindungsschiene (105) erstreckt, wobei das erste Rollenführungsbauglied (120a) dazu ausgebildet ist, das erste Rollenbauglied zu führen, und
ein zweites Rollenführungsbauglied (120b), das sich entlang der Erstreckungsrichtung in dem Nichtführungsbereich auf einer anderen Seite der Verbindungsschiene (105) in der Breitenrichtung der Verbindungsschiene (105) erstreckt, wobei das zweite Rollenführungsbauglied (120b) dazu ausgebildet ist, das zweite Rollenbauglied zu führen.

5. Das schienengeführte Fahrzeugsystem gemäß Anspruch 3 oder 4, wobei
die Schiene (100) auf einer Decke oder in der Nähe der Decke angeordnet ist, wobei die Schiene (100) einen ersten Bewegungsebenenabschnitt und einen zweiten Bewegungsebenenabschnitt an beiden Seiten des unteren Abschnittes der Schiene (100) in einer Breitenrichtung der Schiene (100) umfasst, wobei der erste Bewegungsebenenabschnitt und der zweite Bewegungsebenenabschnitt mit einem Zwischenraum dazwischen angeordnet sind,
wobei das erste Rollenführungsbauglied auf planare Weise von einer Position näher zu dem Zwischenraum des ersten Bewegungsebenenabschnittes der Verbindungsschiene (105) ansteigt,
wobei das zweite Rollenführungsbauglied auf planare Weise von einer Position näher zu dem Zwischenraum des zweiten Bewegungsebenenabschnittes der Verbindungsschiene (105) ansteigt, und das erste Rollenbauglied sowie das zweite Rollenbauglied geführt werden, indem das erste Rollenführungsbauglied und das zweite Rollenführungsbauglied von den Außenseiten der Verbindungsschiene (105) in der Breitenrichtung der Verbindungsschiene (105) anstoßen.

## Revendications

1. Système de véhicule guidé par rail, comprenant:
un rail (100) comportant un premier rail principal (101), un deuxième rail principal (102) et un rail de connexion (105) connectant le premier rail principal (101) au deuxième rail principal (102), et
un ou plusieurs véhicules (200) configurés pour se déplacer tout en étant supportés et guidés par le rail (100),
dans lequel le véhicule (200) comporte:
des rouleaux de déplacement (215) se déplaçant le long du rail (100);
des rouleaux latéraux (650) situés des côtés droit et gauche venant en butée contre les parois de rail;
une unité de déplacement (210) configurée pour se déplacer sur le rail (100);
un premier rouleau divergent et un deuxième rouleau divergent (610) disposés avec un espace, l'espace étant situé entre le premier rouleau divergent et le deuxième rouleau divergent (610) dans le sens de la largeur de l'unité de déplacement (210);
un élément de support de rouleau divergent (720) disposé dans l'unité de déplacement (210), l'élément de support de rouleau divergent (720) supportant le premier rouleau divergent et le deuxième rouleau divergent (610) de sorte que le premier rouleau divergent et le deuxième rouleau divergent (610) puissent être décalés dans le sens de la largeur de l'unité de déplacement (210); et
dans lequel le rail (100) comporte:
un premier guide divergent (110a) s'étendant, d'un côté du rail de connexion (105) dans le sens de la largeur du rail de connexion (105), à partir du premier rail principal (101) dans une direction d'extension du rail de connexion (105), le premier guide divergent (110a) étant configuré pour guider le premier rouleau divergent (610);
un deuxième guide divergent (110b) s'étendant, d'un autre côté du rail de connexion (105) dans le sens de la largeur du rail de connexion (105), vers le deuxième rail principal (102) dans la direction d'extension du rail de connexion (105) tout en présentant une zone de non-guidage qui est disposée de manière non en recouvrement avec le premier guide divergent (110a) dans la direction d'extension du rail de connexion (105), le deuxième guide divergent (110b) étant configuré pour guider le deuxième rouleau divergent (610), où la zone de non-guidage est une zone où il n'est pas prévu de guide divergent;
**caractérisé par le fait que**
le véhicule (200) comporte:
des rouleaux de stabilisation de position (620, 625) configurés pour stabiliser une position de déplacement de l'unité de déplacement (210); et
un élément de support de rouleau de stabilisation de position (710) disposé dans l'unité de déplacement (210), l'élément de support de rouleau de stabilisation de position (710) supportant les rouleaux de stabilisation de position (620, 625) de sorte que les rouleaux de stabilisation de position (620, 625) ne puissent pas être déplacés dans le sens de la largeur de l'unité de déplacement (210), et
le rail (100) comporte:
un guide de rouleau de stabilisation de position (120) disposé dans la zone de non-guidage, le guide de rouleau de stabilisation de position (120) étant configuré pour guider les rouleaux de stabilisation de position (620, 625) dans la zone de non-guidage.

2. Système de véhicule guidé par rail selon la revendication 1, dans lequel
le véhicule (200) comporte un élément de corps principal (220) et une pluralité d'unités de chariot disposées de manière à tourner dans une direction horizontale de l'élément de corps principal (220), et
l'unité de déplacement (210), l'élément de support de rouleau divergent (720) et l'élément de support de rouleau de stabilisation de position (710) sont disposés dans chacune de la pluralité d'unités de chariot.

3. Système de véhicule guidé par rail selon la revendication 1, dans lequel
le rouleau de stabilisation de position (620, 625) comporte un premier élément de rouleau et un deuxième élément de rouleau, le premier élément de rouleau et le deuxième élément de rouleau étant fixés avec un espace entre eux dans le sens de la largeur de l'unité de déplacement (210), et
le guide de rouleau de stabilisation de position (120) comporte:
un premier élément de guidage de rouleau s'étendant dans la direction d'extension d'un côté du rail de connexion (105) dans le sens de la largeur du rail de connexion (105) et dans la zone de non-guidage, le premier élément de guidage de rouleau étant configuré pour guider le premier élément de rouleau, et
un deuxième élément de guidage de rouleau s'étendant dans la direction d'extension d'un autre côté du rail de connexion (105) dans le sens de la largeur du rail de connexion (105) et dans la zone de non-guidage, le deuxième élément de guidage de rouleau étant configuré pour guider le deuxième élément de rouleau.

4. Système de véhicule guidé par rail selon la revendication 2, dans lequel
le rouleau de stabilisation de position comporte un premier élément de rouleau et un deuxième élément de rouleau, le premier élément de rouleau et le deuxième élément de rouleau étant fixés avec un espace entre eux dans le sens de la largeur de l'unité de déplacement (210), et
le guide de rouleau de stabilisation de position (120) comporte:
un premier élément de guidage de rouleau (120a) s'étendant dans la direction d'extension dans la zone de non-guidage, d'un côté du rail de connexion (105) dans le sens de la largeur du rail de connexion (105), le premier élément de guidage de rouleau (120a) étant configuré pour guider le premier élément de rouleau, et
un deuxième élément de guidage de rouleau (120b) s'étendant dans la direction d'extension dans la zone de non-guidage, d'un autre côté du rail de connexion (105) dans le sens de la largeur du rail de connexion (105), le deuxième élément de guidage de rouleau (120b) étant configuré pour guider le deuxième élément de rouleau.

5. Système de véhicule guidé par rail selon la revendication 3 ou 4, dans lequel
le rail (100) est disposé au plafond ou au voisinage du plafond, le rail (100) comportant une première partie de plan de déplacement et une deuxième partie de plan de déplacement de part et d'autre de la partie inférieure du rail (100) dans le sens de la largeur du rail (100), la première partie de plan de déplacement et la deuxième partie de plan de déplacement étant disposées avec un espace entre elles,
le premier élément de guidage de rouleau s'élève de manière plane à partir d'une position plus proche de l'espace de la première partie de plan de déplacement du rail de connexion (105),
le deuxième élément de guidage de rouleau s'élève de manière plane depuis une position plus proche de l'espace de la deuxième partie de plan de déplacement du rail de connexion (105), et le premier élément de rouleau et le deuxième élément de rouleau sont guidés en venant en butée contre respectivement le premier élément de guidage de rouleau et le deuxième élément de guidage de rouleau depuis les côtés extérieurs du rail de connexion (105) dans le sens de la largeur du rail de connexion (105).
